# EUROPÄISCHE PATENTANMELDUNG

(11) **EP 2 295 911 A2**
(43) Veröffentlichungstag der Anmeldung: **16.03.2011**
(21) Anmeldenummer: 10008307.0
(22) Anmeldetag: 10.08.2010
(51) Int. Cl.: F28D 1/02

(54) **Schwimmender Abwasser-Wärmetauscher**

(30) Priorität: 11.08.2009 DE 102009037118
(71) Anmelder: Mauz, Hubert, 78166 Donaueschingen (DE)
(72) Erfinder: Mauz, Hubert, 78166 Donaueschingen (DE)
(74) Vertreter: Maucher, Wolfgang

(57) **Zusammenfassung**

Die Erfindung betrifft einen Wärmetauscher (1) mit zumindest einem Wärmetauscherelement (2), das als ein, in einem Abwasser oder dergleichen Nutzflüssigkeit aufschwimmender Schwimmkörper ausgebildet ist und wenigstens eine wärmeleitende Tauschfläche (4) mit mindestens einer daran angeordneten Wärmetauscherkammer (5) aufweist, wobei die wenigstens eine wärmeleitende Tauschfläche (4) in einem von der Nutzflüssigkeit umspülten Teilbereich des Wärmetauschers (1) angeordnet ist (vgl. Fig. 1).

## Beschreibung

Die Erfindung betrifft einen Wärmetauscher mit zumindest einem Wärmetauscherelement, das wenigstens eine wärmeleitende Tauschfläche mit mindestens einer daran angeordneten Wärmetauscherkammer aufweist, wobei die wenigstens eine wärmeleitende Tauschfläche in einem, von einer Nutzflüssigkeit umspülten Teilbereich des Wärmetauschers angeordnet ist.

Aus der DE 197 19 311 A1, der DE 20 2004 005 768 U1, der DE 20 2004 018 084 U1 oder der DE 10 2005 048 689 B3 sind bereits Wärmetauscher bekannt, die auf der Sohle von Kanälen als überströmte Wärmetauscherelemente verwendet werden können. Die vorbekannten Wärmetauscher bedingen immer eine aufwändige und teuere Wasserhaltung beim Einbau und benötigen eine Mindestwassermenge, damit die Elemente vollständig überströmt sind, um einen wirtschaftlichen Wärmetausch zu erreichen. Diese vollständige Überströmung ist insbesondere bei den nächtlichen, stark absinkenden Abwassermengen ein deutliches Nutzungs- und Entzugsleistungsdefizit. Einbau, Entlüftung, Reparatur, Wartung und Ausbau sind bei diesen Anwendungen bauartbedingt technisch und wirtschaftlich sehr aufwendig und immer mit erheblichen Wasserhaltungskosten verbunden. Bei vermaschten, flach vernetzten, zur Verschlickung neigenden Kanälen und bei Kanälen mit der Gefahr zur Geschiebe- und Geröllverlandung besteht das Risiko, dass der Wärmeübertrag durch die Bedeckung der Wärmetauscherflächen durch Verschlickung, Versandung und Verschotterung erheblich reduziert wird. Bei den vorbekannten Wärmetauschern ergeben sich Probleme bei der für die Funktionstüchtigkeit sehr wichtigen Entlüftung des Systems. Da die Vor- und Rücklaufleitungen in der Regel unter den Wärmetauscherflächen liegen, müssen die Elemente einzeln an den Tauschflächenhochpunkten aufwendig entlüftet werden. Während dem Betrieb notwendig werdende Entlüftungsarbeiten bei Wartung, Reparatur und natürlicher, zwangsläufig entstehender Luftpolsterbildung bedingen einen unverhältnismäßig hohen Aufwand insbesondere durch die Wasserhaltung, Stilllegung und Reinigung der Kanalabschnitte. Ferner sind die zahlreichen Entlüftungspunkte beziehungsweise Entlüftungsventile ein Dichtigkeitsrisiko.

Es hat sich gezeigt, dass sich die Abwasserwärmenutzung insbesondere in kommunalen Zentren mit geeigneten, benachbarten Wärmenutzern und idealen großen und deshalb wirtschaftlichen Abwasserpotentialen anbietet. Da dort jedoch meist große Kanäle mit erheblichen Abwassermengen vorhanden sind, stellt die Abwasserhaltung eine große technische Herausforderung dar, verbunden mit den beim Einbau, der Wartung und Reparatur sehr hohen Kosten. Dieser Umstand kann die Wirtschaftlichkeit derartiger Anlagen in Frage stellen. Außerdem führen die überströmten Wärmetauscherelemente zu Querschnittsverlusten, die von den Abwasserbetreibern wegen der oft hydraulischen Überlastung der Kanäle nicht toleriert und nicht gewünscht werden.

Es besteht daher insbesondere die Aufgabe, einen Wärmetauscher der eingangs erwähnten Art zu schaffen, der die Nachteile des vorbekannten Standes der Technik weitestgehend vermeidet und der eine hohe Effektivität bei gleichzeitig geringem Wartungsaufwand bietet.

Die erfindungsgemäße Lösung dieser Aufgabe besteht bei dem Wärmetauscher der eingangs erwähnten Art insbesondere in den Merkmalen des geltenden Patentanspruchs 1.

Der erfindungsgemäße Wärmetauscher weist zumindest ein Wärmetauscherelement auf, das als Schwimmkörper ausgebildet ist, welcher in einer Flüssigkeit oder Suspension, beispielsweise in einem Abwasser, aufschwimmen kann. Dabei ist der erfindungsgemäße Wärmetauscher in jeder Nutzflüssigkeit einsetzbar, mit deren Hilfe eine Temperaturdifferenz als Wärme- oder Kältequelle genutzt werden kann. Um die Temperatur dieser Nutzflüssigkeit aufnehmen und beispielsweise einer Wärmepumpe zuführen zu können, weist das zumindest eine Wärmetauscherelement des erfindungsgemäßen Wärmetauschers wenigstens eine wärmeleitende Tauschfläche mit mindestens einer daran angeordneten Wärmetauscherkammer auf, wobei die wenigstens eine wärmeleitende Tauschfläche in einem von der Nutzflüssigkeit umspülten Teilbereich des Wärmetauschers angeordnet ist.

Der Erfindung liegt der Gedanke zugrunde, dass das zumindest eine Wärmetauscherelement des erfindungsgemäßen Wärmetauschers als schwimmendes, unterströmtes Element auf fließenden oder stehenden Flüssigkeiten oder Suspensionen zum Wärmetausch oder Kältetausch eingebaut wird, um zur Wärme- oder Kältegewinnung Wärme oder Kälte über Vor- und Rücklaufverrohrungen einer Wärme- oder Kältepumpe zuzuleiten. Diese Flüssigkeiten können sowohl als Abwässer in Kanälen und Rohren aller Geometrien geführt sein, als auch stehende Abwässer und Fließgewässer sowie stehende Gewässer in Becken, Weihern und Seen, insbesondere jedoch in Kläranlagen und Industriebecken sein, die beispielsweise durch künstlichen Energieeintrag ein höheres Wärmepotential als Frischwasser aufweisen. Es können auch natürliche oder industrielle Wässer mit Wärmepotentialen oder Kühlpotentialen genutzt werden.

Der erfindungsgemäße Wärmetauscher ermöglicht in einfacher, rationeller Weise den Einbau zumindest eines Wärmetauscherelements insbesondere in Kanälen und Becken mit großem Abwasseranfall durch den Wegfall einer Wasserhaltung. Die entfallende Wasserhaltung ermöglicht in vielen Fällen erst die wirtschaftliche Anwendung der Wärmenutzung in Kanälen, insbesondere in großen Abwässerkanälen. Geschiebe sowie Schweb- und Sinkstoffe beeinträchtigen den Wärmeübertrag nicht, da sie unter den Wärmetauscherelementen durchströmen. Negative Einflüsse durch Geschiebe, Verlandung, Verstopfung durch Hygieneartikel und Verschlickungen sind für den erfindungsgemäßen Wärmetauscher keine Nutzungsrisiken. Da das zumindest eine Wärmetauscherelement des erfindungsgemäßen Wärmetauschers als aufschwimmender Schwimmkörper ausgebildet ist, und da der erfindungsgemäße Wärmetauscher somit praktisch keine Querschnittsverengung verursacht, kann man den erfindungsgemäßen Wärmetauscher als schadlos für den Kanalquerschnitt und die hydraulische Leistungsfähigkeit eines Kanals betrachten. Dieser Umstand erweitert die Anwendungsmöglichkeit des erfindungsgemäßen Wärmetauschers erheblich, insbesondere in Ballungszentren. Dort sind die Kanalquerschnitte durch die ständigen Zulauferweiterungen hydraulisch meist ungenügend dimensioniert, was einen Einbau querschnittsverengender Wärmetauscher verunmöglicht, obwohl günstige Wärmeentzugspotentiale und ideale, potentielle Wärmenutzer in optimaler Entfernung vom Kanal vorhanden wären.

Da bei den Wärmetauscherelementen des erfindungsgemäßen Wärmetauschers keine Abrasion durch überströmendes, materialabtragendes, erodierendes Geschiebe, wie bei den herkömmlichen Wärmetauschern erfolgt, können die Wandstärken der erfindungsgemäß verwendeten Wärmetauscherelemente gering gehalten werden. Ein weiterer Vorteil liegt in der geringeren, wärme-übertragungsmindernden Sielhautbildung (Biofilm) und deren einfacher Beseitigung durch einen einfachen Hochdruckreinigungsvorgang in den Kontrollschächten.

Vorteilhaft kann es sein, wenn wenigstens ein Wärmetauscherelement mit der Längsachse seines Querschnitts etwa längs oder quer zur Oberfläche der Nutzflüssigkeit angeordnet ist. Dabei schwimmt ein Wärmetauscherelement, das mit der Längsachse seines Querschnitts etwa längs zur Oberfläche der Nutzflüssigkeit angeordnet ist, praktisch brettartig auf der Wasseroberfläche und zeichnet sich durch einen besonders geringen hydraulischen Widerstand aus. Demgegenüber bietet ein Wärmetauscherelement, das mit der Längsachse seines Querschnitts etwa quer zur Oberfläche der Nutzflüssigkeit angeordnet ist, den Vorteil, dass ein solches Wärmetauscherelement über den an der Wasseroberfläche schwimmenden Öl- oder Schmutzfilm hinaus tief in die Nutzflüssigkeit eintaucht und deshalb weniger zur Ablagerung einer Sielhaut oder dergleichen Biofilms neigen wird.

Zweckmäßig ist es, wenn wenigstens ein Wärmetauscherelement im Bereich der wenigstens einen wärmeleitenden Tauschfläche und/oder auf der der Tauschfläche abgewandten Seite des Wärmetauscherelements eine konvexe oder dergleichen nach außen gewölbte oder gebogene Außenkontur hat. Selbst wenn zumindest zwei Wärmetauscherelemente gelenkig miteinander verbunden sind und nebeneinander in der Kanalströmung schwimmen, können sich die Wärmetauscherelemente mit ihrer Unterseite und/oder mit ihrer Oberseite bei niedrigem Flüssigkeitsspiegel und/oder bei hohem Flüssigkeitsspiegel im Kanal nahezu formangepasst an die innere Kanalumfangswandung anlegen.

Bevorzugte Ausführungsformen gemäß der Erfindung sehen daher vor, dass wenigstens ein Wärmetauscherelement mit einem elliptischen Querschnitt oder bojenartig insbesondere mit einem birnen- oder schwertkielförmigen, dreieckigen oder vieleckigen Querschnitt ausgestaltet ist. Während ein elliptischer Querschnitt bei einem brett- oder kissenartig an der Wasseroberfläche schwimmenden Wärmetauscherelement aus den oben genannten Gründen von Vorteil sein kann, bietet eine bojenartige und insbesondere mit einem birnen- oder schwertkielförmigen, dreieckigen oder vieleckigen Querschnitt ausgestaltete Außenkontur bei solchen Wärmetauscherelementen Vorzüge, die mit der Längsachse ihres Querschnitts etwa quer zur Oberfläche der Nutzflüssigkeit angeordnet sind.

Eine bevorzugte Ausführungsform gemäß der Erfindung sieht vor, dass wenigstens eine, ein Wärmetauschermedium führende Wärmetauscherkammer als Wandungszwischenraum eines zumindest zweilagigen Wandungsabschnitts eines Wärmetauscherelements ausgebildet ist. Dieser zumindest zweilagige Wandungsabschnitt ist nahe an der Außenkontur des Wärmetauscherelements angeordnet oder bildet dessen Außenkontur in diesem Teilbereich.

Eine weiterbildende Ausführungsform gemäß der Erfindung sieht vor, dass das wenigstens eine Wärmetauscherelement zum Zu- und Ableiten des Wärmetauschermediums zu der mindestens einen Wärmetauscherkammer zumindest eine Zulaufleitung und wenigstens eine Ablaufleitung hat, die vorzugsweise in gegenüberliegenden Längsrandbereichen des Wärmetauscherelements angeordnet sind. Die bevorzugte Anordnung der Zulauf- und Ablaufleitungen in gegenüberliegenden Längsrandbereichen des Wärmetauscherelements begünstigt eine praktisch automatische Entlüftung und einen strömungsgünstigen Querschnitt des betreffenden Wärmetauscherelements.

Eine gute Strömungsführung des Wärmetauschermediums im Wärmetauscherelement wird begünstigt, wenn die Zu- und Ablaufleitungen wenigstens eines Wärmetauscherelements in diagonal gegenüberliegenden Eckbereichen der Wärmetauscherkammer an diese angeschlossen sind. Zu diesem Zweck kann es auch vorteilhaft sein, wenn in der das Wärmetauschermedium führenden Wärmetauscherkammer zumindest ein Leitblech zur Strömungsführung des Wärmetauschermediums vom Zu- zum Ablauf des betreffenden Wärmetauscherelements vorgesehen ist.

Um dem zumindest einen, als aufschwimmender Schwimmkörper ausgebildeten Wärmetauscherelement eine möglichst große Auftriebskraft zu geben, ist es vorteilhaft, wenn zumindest ein Wärmetauscherelement zumindest in einem Teilbereich und vorzugsweise bis auf die mindestens eine Wärmetauscherkammer praktisch vollständig ausgeschäumt ist.

Um die Oberfläche der Nutzflüssigkeit möglichst großflächig zur Wärme- oder Kältebildung einsetzen zu können, ist es vorteilhaft, wenn mehrere Wärmetauscherelemente kettengliederartig miteinander verbindbar sind.

Um die Wärmetauscherkammern der kettengliederartig miteinander verbundenen Wärmetauscherelemente miteinander zu verbinden, ist es vorteilhaft, wenn zumindest zwei Wärmetauscherelemente über die Zu- und Ablaufrohre und insbesondere über zugfeste Kupplungen, Verschraubungen, Scherstabmuffen und/oder Verspannseile zu einer Wärmetauscherkolonne kuppelbar sind.

Eine bevorzugte Ausführungsform gemäß der Erfindung sieht vor, dass an der Unterseite zumindest eines Wärmetauscherelements wenigstens eine Finne oder dergleichen Richtungsstabilisator vorgesehen ist. Die wenigstens eine, an der Unterseite zumindest eines Wärmetauscherelements vorgesehene Finne oder dergleichen Richtungsstabilisator begünstigt eine ruhige und ausgeglichene Schwimmposition des Wärmetauscherelements im Flüssigkeitsstrom.

Dabei sieht eine bevorzugte Ausführungsform gemäß der Erfindung vor, dass der an zumindest einem Wärmetauscherelement vorgesehene, wenigstens eine Richtungsstabilisator als insbesondere länglicher und/oder dreiecksförmiger Schwimmflügel, Flosse oder dergleichen Vorsprung ausgestaltet und/oder als Aufstands- und Abstandshalter bei Niedrigwasser ausgebildet ist. Ein solcher, als Vorsprung ausgestalteter und gleichzeitig auch als Aufstands- und Abstandshalter bei Niedrigwasser ausgebildeter Richtungsstabilisator verhindert, dass das betreffende Wärmetauscherelement bei Niedrigwasser zu tief in den Schlick einsinken kann und begünstigt das erneute Aufschwimmen des Wärmetauscherelements bei wieder ansteigendem Flüssigkeitsspiegel.

Um den hydraulischen Widerstand des erfindungsgemäßen Wärmetauschers noch zu reduzieren, ist es vorteilhaft, wenn das oberstromseitige Wärmetauscherelement einer Wärmetauscherkolonne zuströmseitig eine gebogene schiefe Ebene, eine schiffsbugförmige Ausbildung oder dergleichen Anströmverjüngung hat.

Um die zu einer Wärmetauscherkolonne miteinander verbundenen Wärmetauscherelemente des erfindungsgemäßen Wärmetauschers in ihrer Position fixieren und gegen ein unbeabsichtigtes Wegschwimmen sichern zu können, ist es vorteilhaft, wenn die Wärmetauscherkolonne insbesondere oberstromseitig mit wenigstens einem Sicherungsseil gesichert ist.

Damit die zu einer Wärmetauscherkolonne verbundenen Wärmetauscherelemente sich auch in vertikaler Richtung entsprechend dem Flüssigkeitsspiegel bewegen können, ist es vorteilhaft, dass die zu einer Wärmetauscherkolonne führenden Zulaufleitungen und die von einer Wärmetauscherkolonne abführenden Ablaufleitungen als elastische Verbindungsleitungen ausgebildet sind, die an einen zur Wärmepumpe führenden Übergabepunkt anschließbar sind.

Eine bevorzugte Weiterbildung gemäß der Erfindung sieht vor, dass die das Wärmetauschermedium führende Wärmetauscherkammer des zumindest einem Wärmetauscherelements über die höherliegenden Zu- und/oder Ablaufleitungen zu entlüften ist.

Eine ruhige Schwimmposition auch einer vergleichsweise langen Wärmetauscherkolonne wird begünstigt, wenn auf die Wärmetauscherkolonne abströmseitig eine konstante Spannung aufbringbar ist.

Um einer oberflächlichen Schmutzanlagerung an dem zumindest einen Wärmetauscherelement des erfindungsgemäßen Wärmetauschers entgegenzuwirken, ist es vorteilhaft, wenn zumindest ein Wärmetauscherelement eine Oberfläche und insbesondere eine Oberflächenbeschichtung und/oder Oberflächenstruktur hat, die strömungsgünstig ausgestaltet ist und/oder der Adhäsion von Sielhaut beziehungsweise Biofilm entgegenwirkt.

Weiterbildungen gemäß der Erfindung ergeben sich aus den Ansprüchen sowie der Beschreibung. Nachstehend wird die Erfindung anhand bevorzugter Ausführungsbeispiele noch näher beschrieben.

Es zeigt in schematischer Darstellung:
- Fig. 1: einen Wärmetauscher, der mehrere, als aufschwimmen- der Schwimmkörper ausgebildete Wärmetauscherele- mente umfasst, die zu einer Wärmetauscherkolonne miteinander verbunden sind, in einer schematischen Durchsicht,
- Fig. 2: eines der Wärmetauscherelemente aus Figur 1 in ei- ner schematischen Durchsicht,
- Fig. 3: zwei Wärmetauscherelemente, die gelenkig miteinan- der verbunden und nebeneinander auf der Flüssig- keitsoberfläche einer in einem Kanal geführten Nutzflüssigkeit schwimmen,
- Fig. 4: die beiden Wärmetauscherelemente aus Figur 3 bei einem hohen Flüssigkeitsspiegel der Nutzflüssigkeit im Kanal,
- Fig. 5: ein Wärmetauscherelement in einer schematischen Draufsicht,
- Fig. 6: mehrere, zu einer Wärmetauscherkolonne miteinander verbundene Wärmetauscherelemente, die im Bereich einer Kanalöffnung in einem Kanal verankert sind,
- Fig. 7: ein bojenartiges Wärmetauscherelement in einem Querschnitt und
- Fig. 8: ein ebenfalls bojenartiges Wärmetauscherelement mit einem schwertkielförmigen Querschnitt.

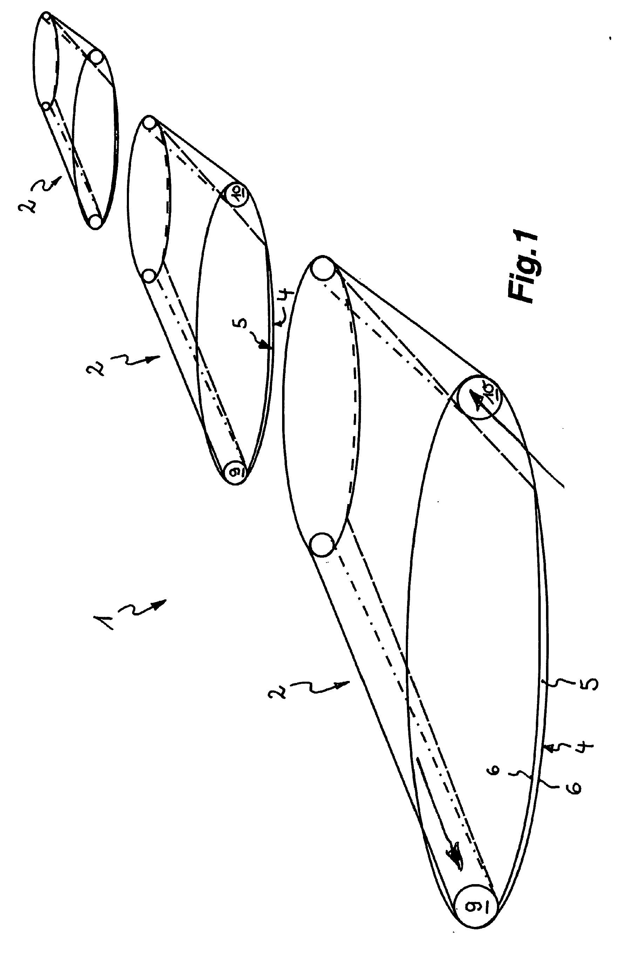

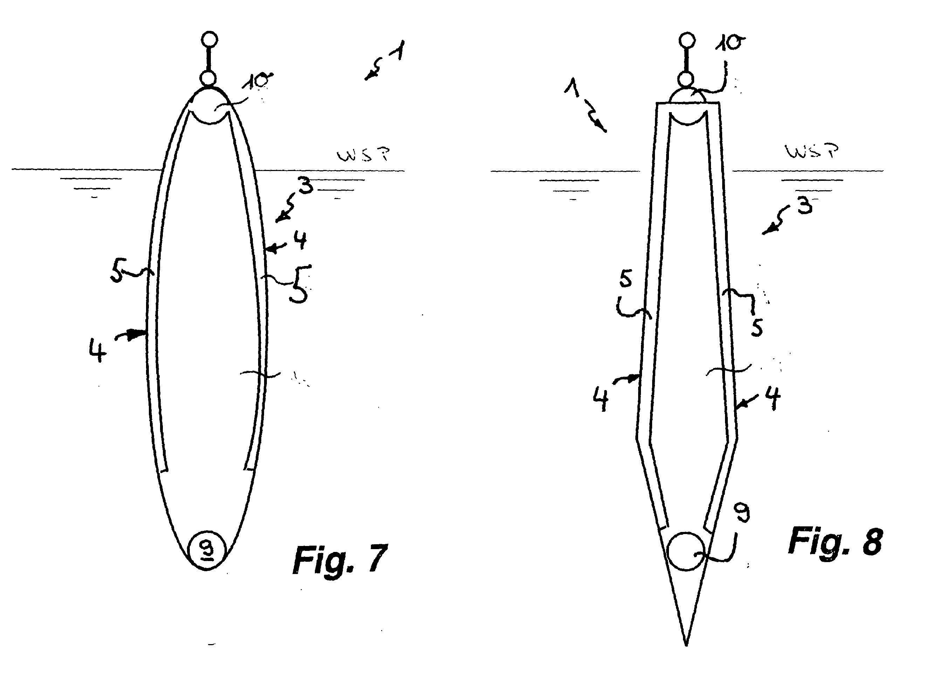

In den Figuren 1 bis 8 sind verschiedene Wärmetauscher 1 dargestellt, die zumindest ein Wärmetauscherelement 2 oder 3 umfassen. Die Wärmetauscherelemente 2, 3 sind jeweils als ein, in einem Abwasser oder dergleichen Nutzflüssigkeit aufschwimmender Schwimmkörper ausgebildet. Während die in den Figuren 1 bis 6 dargestellten Wärmetauscherelemente 2 mit der Längsachse ihres Querschnitts etwa längs zur Oberfläche der Nutzflüssigkeit angeordnet sind und somit brett- oder kissenförmig auf der Flüssigkeitsoberfläche schwimmen, ist die Längsachse der in den Figuren 7 und 8 gezeigten Wärmetauscherelemente 3 etwa quer zur Oberfläche der Nutzflüssigkeit orientiert, so dass diese nahezu bojenartig in der Nutzflüssigkeit aufschwimmen.

Die Wärmetauscherelemente 2, 3 weisen wenigstens eine wärmeleitende Tauschfläche 4 mit mindestens einer daran angeordneten Wärmetauscherkammer 5 auf, wobei die wenigstens eine wärmeleitende Tauschfläche 4 in einem von der Nutzflüssigkeit umspülten Teilbereich des Wärmetauschers 2, 3 angeordnet ist.

Die in den Figuren 1 bis 7 dargestellten Wärmetauscherelemente 2, 3 weisen sowohl auf der der Tauschfläche 4 abgewandten Seite als auch im Bereich der zumindest einen Tauschfläche 4 eine konvexe oder dergleichen nach außen gewölbte Außenkontur auf. Dabei weisen die in den Figuren 1 bis 5 und 7 abgebildeten Wärmetauscherelemente 2, 3 einen elliptischen Querschnitt auf.

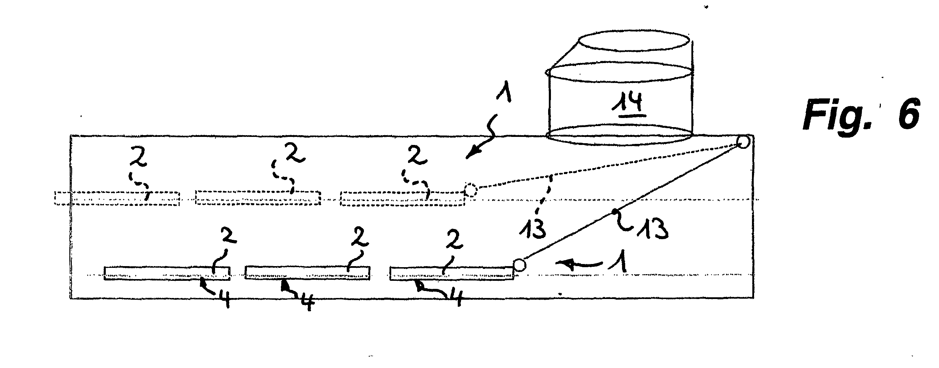

Wie aus den Figuren 1 und 6 erkennbar ist, sind die Wärmetauscherelemente 2 als liegender, schwimmender Hohlkörper, vergleichbar einem Surfbrett, ausgebildet. Dabei ist die wenigstens eine, ein Wärmetauschermedium führende Wärmetauscherkammer 5 als Wandungszwischenraum eines zumindest zweilagigen Wandungsabschnitts des betreffenden Wärmetauscherelements 2 ausgestaltet. Dazu besteht die Unterseite, d.h. die benetzte Wasserseite der in Figur 1 gezeigten Wärmetauscherelemente 2 beispielsweise aus doppelwandigen Edelstahlblechen 6, welche die verrippte, mäandrierende und durchströmte Wärmetauscherkammer 5 umgrenzen.

In den Wärmetauscherkammern 5 fließt das Wärmetauschermedium, das, durch Leitbleche 7 gelenkt, durch die Wärmetauscherkammern 5 durchgeleitet wird. Oberseitig, d.h. luftseitig wird ein Deckblech oder dergleichen Abdeckung 8, die beispielsweise aus Edelstahlblech hergestellt sein kann, verwendet. Die Oberflächen des Wärmetauscherelements 2, 3, können strukturiert sein, um die Adhäsion von Sielhaut zu verringern. In den beidseitigen, engsten Radien der als flachliegende Hohlkörper-Ellipse ausgebildeten Wärmetauscherelemente 2 sind die Vor- und Rücklaufrohre für die Zulauf- und Ablaufleitungen 9, 10 zur Wärmepumpe angebracht. Über Muffen, Abgangsstücke oder Schlitze kann so das Wärmetauschermedium in die Wärmetauscherkammern 5 aus- und einströmen, vorzugsweise in den diagonal gegenüberliegenden Ecken der Wärmetauscherelemente 2. Die beidseitigen Stirnflächen der Wärmetauscherelemente 2 werden mit dichten Stirnblechen abgedichtet, durch welche die Zu- und Ablaufleitungen 9, 10 druckdicht hindurchgeführt und mit Schnell-Kupplungsstücken an den nächsten, benachbarten Wärmetauscherelementen 2 angedockt werden. Das Wärmetauscherelement 2 kann, mit Ausnahme im Bereich der Wärmetauscherkammer 5, ausgeschäumt werden. Die Geometrie des Wärmetauscherelementes 2 wird durch die benötigte Auftriebskraft bestimmt. Die Abmessungen der Wärmetauscherelemente 2, 3 richten sich nach der Kanalgeometrie und den Einbringungsmöglichkeiten in den Kanal und haben vorzugsweise einen rechteckigen Grundriss.

In den Figuren 1, 3, 4 und 6 ist erkennbar, dass die Wärmetauscherelemente 2 kettengliederartig miteinander verbunden sein können, wobei die Wärmetauscherelemente 2 über die Zu- und Ablaufleitungen 9, 10 und insbesondere über zugfeste Kupplungen, Verschraubungen, Scherstabmuffen und Verspannseile zu einer Wärmetauscherkolonne kuppelbar sind.

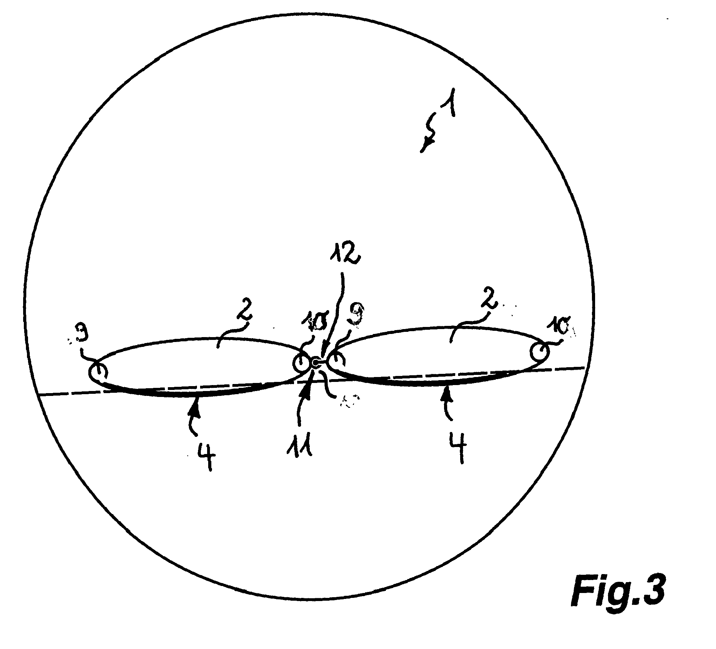

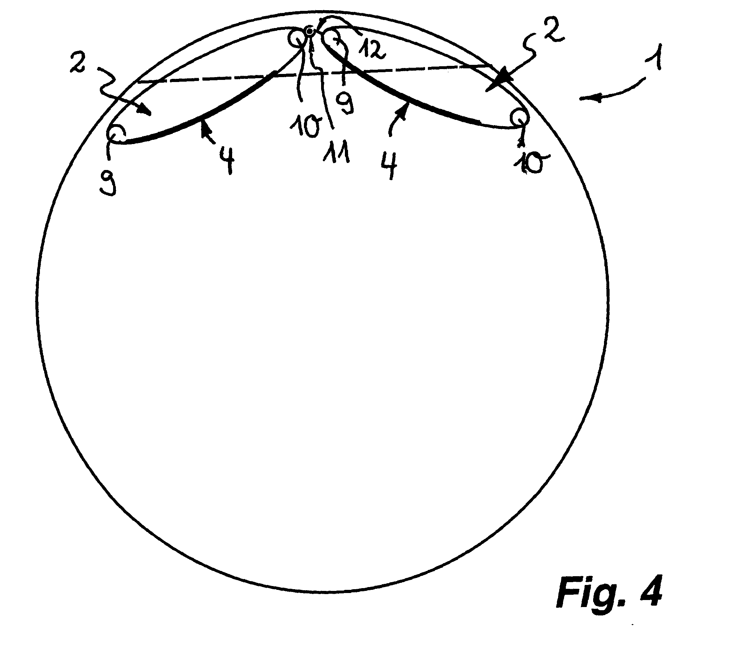

Um die Wärmetauscherelemente 2 gelenkig miteinander zu verbinden, kann an der einen Längs- und/oder Querseite eines Wärmetauscherelements 2 eine Gelenkpfanne 11 angeordnet sein, in die ein Gelenkkopf 12 eingreift, der an der anderen Längs- und/oder Querseite eines weiteren Wärmetauscherelements 2 vorgesehen ist. Wie in den Figuren 3 und 4 angedeutet ist, können diese Gelenkpfannen und -köpfe 11, 12 auch kederleistenartig eine langgestreckte Form aufweisen und ein sogenanntes "Kederleisten-Gelenk" bilden.

Dadurch können auch bei großen Kanälen Wärmetauscherelemente 2 einer einzigen, standardisierten und somit wirtschaftlichen Bauart verwendet werden und die Kolonnenlängen lassen sich bei paralleler Anordnung der Wärmetauscherelemente 2 je nach Bedarf des Wärmeentzuges kürzer halten. Vor allem aber sind auf einfache Weise zwei voneinander unabhängige Vor- und Rücklaufkreisläufe installierbar. Diese Möglichkeiten erhöhen die Wirtschaftlichkeit und die Variabilität bei der Entzugssteuerung und Entzugsleistung.

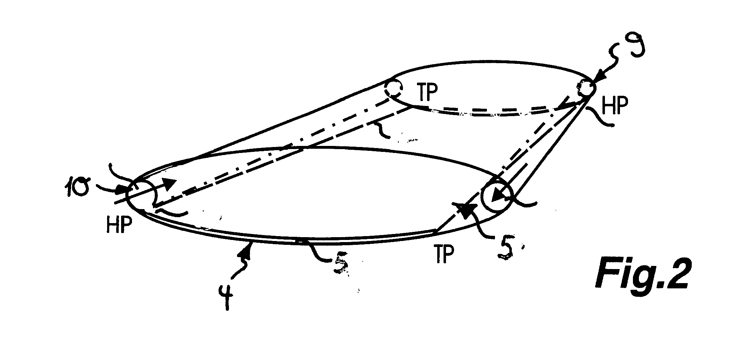

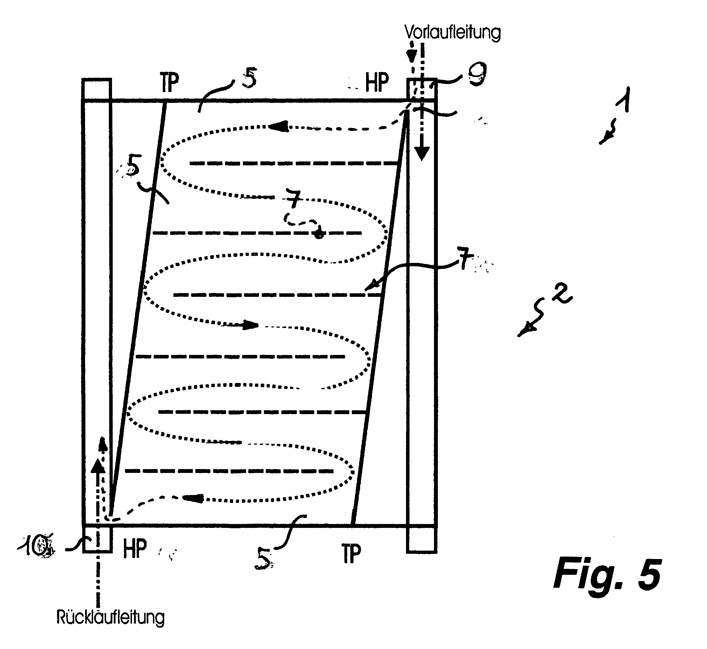

In den Querschnitten in Figur 2 und 5 ist gezeigt, dass die Vor- und Zulaufrohre der Zu- und Ablaufleitungen 9, 10 höhenmäßig über der Wärmetauscherkammer 5 an der Unterseite der Wärmetauscherelemente 2 und somit an deren Wasserseite liegen. Dabei sind die Zu- und Ablaufleitungen 9, 10 in Längserstreckung der Wärmetauscherelemente 2 so geführt, dass der zuströmseitige Leitungsabschnitt im Vergleich zum abströmseitigen Leitungsabschnitt tiefer liegt. Auf diese Weise werden die Wärmetauscherelemente 2 zwangsweise und völlig selbsttätig zu den Hochpunkten in den Vor- und Rücklaufrohren entlüftet. Außerdem findet eine selbsttätige und zwangsweise Entlüftung über die Vor- und Rücklaufrohre zum Hochpunkt am Verrohrungsanschlußpunkt, im oberströmseitigen Anschlussschacht, dem Verteuungspunkt und dem Anschlusspunkt am Hochpunkt der Zulauf- und Ablaufleitungen 9, 10 statt. Die Rohrverbindungen zwischen den einzelnen Wärmetauscherelementen 2 bestehen vorzugsweise entweder aus schubsicheren, beweglichen, abwinkelbaren, gelenkigen Schnellspannkupplungen oder elastischen Verschraubungen oder aus Muffen mit Scherstabsicherungen. Die Einzelstöße der als Hohlkammerelemente ausgebildeten Wärmetauscherelemente 2 werden mit einem strömungsgünstigen Verbindungsdeckblech oder einer Manschette überbrückt.

Um den hydraulischen Widerstand einer Wärmetauscherkolonne zu reduzieren, ist es zweckmäßig, wenn das oberstromseitige Wärmetauscherelement 2 zuströmseitig eine gebogene schiefe Ebene, eine schiffsbugförmige Ausbildung oder dergleichen Anströmverjüngung hat. Um eine solche Wärmetauscherkolonne gegen ein Wegschwimmen zu sichern, kann diese - wie in Figur 6 erkennbar ist - oberstromseitig mit wenigstens einem Sicherungsseil 13 gesichert sein, während auf die Wärmetauscherkolonne abströmseitig bei Bedarf auch eine konstante Spannung aufbringbar ist.

Am angeströmten oberstromseitigen Ende der Wärmetauscherkolonne wird somit eine strömungsgünstige Kufe oder ein Keil oder ein Bug ausgebildet nach Art einer gekrümmten schiefen Ebene oder eines Schiffsbuges. An diesem angeströmten oberstromseitigen Bereich der Wärmetauscherkolonne wird die gesamte schubgesicherte und schwimmende Wärmetauscherkolonne mit einem verstellbaren, windenbetriebenen Drahtseilsystem elastisch und beweglich an einer Verankerung, die an einem Schacht 14 angeschlagen sein kann, befestigt und gesichert.

Die Richtungsstabilität der im Flüssigkeitsstrom schwimmenden Wärmetauscherelemente 2 kann durch eine oder mehrere Stabilisierungsfinnen an der Unterseite der Wärmetauscherelemente erreicht und erhöht werden, um einem Schlingern, verursacht durch die meist turbulente Strömung der Kanäle, entgegenzuwirken. Ein Spannseil 13, mit Gegengewicht am unterstromseitigen Ende, kann ebenso die Richtungsstabilität der Wärmetauscherkolonne gewährleisten. Durch die schwimmende Bauart, die besondere Befestigung und die Betriebsweise der hier dargestellten Wärmetauscherelemente 2, 3 passt sich der Wärmetauscher 1 dem Wasserstand und dem ständig schwankenden Niveau der Nutzflüssigkeit, das durch die Tagesganglinien oder auch durch die Niederschläge bedingt ist, wie bei einem Ponton ständig an. Selbst ein Trockenfallen der Kanäle oder ein Minimalabfluss schadet nicht, da die als Richtungsstabilisatoren dienenden Finnen an der Unterseite der Wärmetauscherelemente zugleich als Abstandhalter und Aufstandsfüße fungieren und ein erneutes Unterströmen durch die einwirkende Auftriebskraft das Aufschwimmen selbsttätig erzeugt. Ein Volleinstau mit resultierendem Aufschwimmen in die Firste, das heißt den Kanalscheitel, schadet dem System genauso wenig, wie der Minimalabfluss, da die Geometrie der Wärmetauscherelemente ober- und unterseitig dem Kanalradius angenähert ist. Selbst bei den parallelen, durch die beweglichen Kederleisten-Gelenke gelenkig verbundenen Wärmetauscherelementen schmiegen sich diese in der Firste bei Maximaleinstau an der Rohrwandung an. Außerdem ergibt sich in der Praxis bei großen Kanälen aufgrund des Druckliniengefälles so gut wie nie ein Volleinstau.

Die in den Figuren 7 und 8 gezeigten Wärmetauscherelemente 3 sind bojenartig ausgebildet und schweben praktisch senkrecht in der Nutzflüssigkeit. Die Wärmetauscherelemente 3 gemäß den Figuren 7 und 8 können beispielsweise in Abscheidern vorteilhaft eingesetzt werden, in denen sich beispielsweise Suspensionen aus Öl, Fäkalien, Speiseabfällen und dergleichen befinden. Da in solchen Abscheidern an der Oberfläche die leichteren Stoffe schweben, ist ein solches Wärmetauscherelement 3 von Vorteil, das an seinen beiden Längsseiten die Wärmetauscherkammern 5 hat. Dabei sind die Zu- und Ablaufleitungen 9, 10 an den Schmalseiten des Wärmetauscherelements 3 angeordnet. Von Vorteil ist es, wenn die Zulaufleitung 9 an der Wärmetauscher-Unterseite und die Ablaufleitung 10 an der Wärmetauscher-Oberseite angeordnet ist, so dass auch diese Wärmetauscherelemente 3 zwangsentlüftet werden können. Solche Wärmetauscherelemente 3 können beispielsweise in runden Behältern in der Form einer "Tortenteilung" eingehängt werden, wobei die Tauschflächen 4 unter der Leichtsuspensionszone der Nutzflüssigkeit angeordnet sind.

## Patentansprüche

1. Wärmetauscher (1) mit zumindest einem Wärmetauscherelement (2, 3), das als ein, in einem Abwasser oder dergleichen Nutzflüssigkeit aufschwimmender Schwimmkörper ausgebildet ist und wenigstens eine wärmeleitende Tauschfläche (4) mit mindestens einer daran angeordneten Wärmetauscherkammer (5) aufweist, wobei die wenigstens eine wärmeleitende Tauschfläche (4) in einem von der Nutzflüssigkeit umspülten Teilbereich des Wärmetauschers angeordnet ist.

2. Wärmetauscher nach Anspruch 1, **dadurch gekennzeichnet, dass** wenigstens ein Wärmetauscherelement (2, 3) mit der Längsachse seines Querschnitts etwa längs oder quer zur Oberfläche der Nutzflüssigkeit angeordnet ist.

3. Wärmetauscher nach Anspruch 1 oder 2, **dadurch gekennzeichnet, dass** wenigstens ein Wärmetauscherelement (2, 3) im Bereich der wenigstens einen wärmeleitenden Tauschfläche (4) und/oder auf der der Tauschfläche (4) abgewandten Seite des Wärmetauscherelements (2, 3) eine konvexe oder dergleichen nach außen gewölbte Außenkontur hat.

4. Wärmetauscher nach einem der Ansprüche 1 bis 3, **dadurch gekennzeichnet, dass** wenigstens ein Wärmetauscherelement (2, 3) mit einem elliptischen Querschnitt oder bojenartig insbesondere mit einem birnen- oder schwertkielförmigen, dreieckigen oder vieleckigen Querschnitt ausgestaltet ist.

5. Wärmetauscher nach einem der Ansprüche 1 bis 4, **dadurch gekennzeichnet, dass** wenigstens eine, ein Wärmetauschermedium führende Wärmetauscherkammer (5) als Wandungszwischenraum eines zumindest zweilagigen Wandungsabschnitts eines Wärmetauscherelements (2, 3) ausgebildet ist.

6. Wärmetauscher nach einem der Ansprüche 1 bis 5, **dadurch gekennzeichnet, dass** das wenigstens eine Wärmetauscherelement (2, 3) zum Zu- und Ableiten des Wärmetauschermediums zu der mindestens einen Wärmetauscherkammer (5) zumindest eine Zulaufleitung (9) und wenigstens eine Ablaufleitung (10) hat, die vorzugsweise in gegenüberliegenden Längsrandbereichen des Wärmetauscherelementes (2, 3) angeordnet sind.

7. Wärmetauscher nach einem der Ansprüche 1 bis 6, **dadurch gekennzeichnet, dass** in der das Wärmetauschermedium führenden Wärmetauscherkammer (5) zumindest ein Leitblech (7) zur Strömungsführung des Wärmetauschermediums vom Zu- zum Ablauf des betreffenden Wärmetauscherelements (2, 3) vorgesehen ist.

8. Wärmetauscher nach einem der Ansprüche 1 bis 7, **dadurch gekennzeichnet, dass** zumindest ein Wärmetauscherelement (2, 3) bis auf die mindestens eine Wärmetauscherkammer (5) ausgeschäumt ist.

9. Wärmetauscher nach einem der Ansprüche 1 bis 8, **dadurch gekennzeichnet, dass** mehrere Wärmetauscherelemente (2, 3) kettengliederartig miteinander verbindbar sind.

10. Wärmetauscher nach einem der Ansprüche 1 bis 9, **dadurch gekennzeichnet, dass** zumindest zwei Wärmetauscherelemente (2, 3) über die Zu- und Ablaufleitungen (9, 10) und insbesondere über zugfeste Kupplungen, Verschraubungen, Scherstabmuffen und/oder Verspannseile zu einer Wärmetauscherkolonne kuppelbar sind.

11. Wärmetauscher nach einem der Ansprüche 1 bis 10, **dadurch gekennzeichnet, dass** an der Unterseite zumindest eines Wärmetauscherelements (2) wenigstens eine Finne oder dergleichen Richtungsstabilisator vorgesehen ist.

12. Wärmetauscher nach Anspruch 11, **dadurch gekennzeichnet, dass** der an zumindest einem Wärmetauscherelement (2) vorgesehene, wenigstens eine Richtungsstabilisator als insbesondere länglicher und/oder dreiecksförmiger Schwimmflügel, Flosse oder dergleichen Vorsprung ausgestaltet und/oder als Aufstands- und Abstandshalter bei Niedrigwasser ausgebildet ist.

13. Wärmetauscher nach einem der Ansprüche 1 bis 12, **dadurch gekennzeichnet, dass** das oberstromseitige Wärmetauscherelement einer Wärmetauscherkolonne zuströmseitig eine gebogene schiefe Ebene, eine schiffsbugförmige Ausbildung oder dergleichen Anströmverjüngung hat.

14. Wärmetauscher nach einem der Ansprüche 1 bis 13, **dadurch gekennzeichnet, dass** die Wärmetauscherkolonne insbesondere oberstromseitig mit wenigstens einem Sicherungsseil (13) gesichert ist.

15. Wärmetauscher nach einem der Ansprüche 1 bis 14, **dadurch gekennzeichnet, dass** die zu einer Wärmetauscherkolonne führende Zulaufleitungen (9) und die von einer Wärmetauscherkolonne abführenden Ablaufleitungen (10) als elastische Verbindungsleitungen ausgebildet sind, die an einen zur Wärmepumpe führenden Übergabepunkt anschließbar sind.

16. Wärmetauscher nach einem der Ansprüche 1 bis 15, **dadurch gekennzeichnet, dass** die das Wärmetauschermedium führende Wärmetauscherkammer (5) des zumindest einen Wärmetauscherelements (2, 3) über die höherliegenden Zu- und Ablaufleitungen (9, 10) zu entlüften ist.

17. Wärmetauscher nach einem der Ansprüche 1 bis 16, **dadurch gekennzeichnet, dass** auf die Wärmetauscherkolonne abströmseitig eine konstante Spannung aufbringbar ist.

18. Wärmetauscher nach einem der Ansprüche 1 bis 17, **dadurch gekennzeichnet, dass** zumindest ein Wärmetauscherelement (2, 3) eine Oberfläche und insbesondere eine Oberflächenbeschichtung und/oder Oberflächenstruktur hat, die strömungsgünstig ausgestaltet ist und/oder der Adhäsion von Sielhaut beziehungsweise Biofilm entgegenwirkt.

19. Wärmetauscher nach einem der Ansprüche 1 bis 18, **dadurch gekennzeichnet, dass** zur gelenkigen Verbindung benachbarter Wärmetauscherelemente an zumindest einer Längs- und/oder Querseite wenigstens eines Wärmetauscherelementes (2, 3) eine vorzugsweise leistenförmige Gelenkpfanne (11) vorgesehen ist, die mit einem vorzugsweise leistenförmigen Gelenkkopf (12) an einem benachbarten Wärmetauscherelement (2, 3) zusammenwirkt.
